# EUROPEAN PATENT APPLICATION

(11) **EP 3 439 189 A1**
(43) Date of publication of application: **06.02.2019**
(21) Application number: 17184969.8
(22) Date of filing: 04.08.2017
(51) Int. Cl.: H04B 3/32, H04L 12/28, H04L 25/02, H04L 27/00, H04L 27/26, H04M 3/18, H04M 3/30, H04M 11/06

(54) **ARRANGEMENT AND METHOD FOR PROCESSING SIGNALS AT AN ACCESS NODE OF A DIGITAL COMMUNICATION SYSTEM**

(71) Applicant: Nokia Solutions and Networks Oy, 02610 Espoo (FI)
(72) Inventor: Maes, Jochen, 2018 Antwerpen (BE); Tsiaflakis, Paschalis, 2018 Antwerp (BE)
(74) Representative: D'Halleweyn, Nele Veerle Trees Gertrudis

(57) **Abstract**

A method for processing signals at an access node of a digital communication system, the method comprising: mitigating crosstalk at a first processing stage of a front end of a plurality of front ends using a respective nonlinear P-coder for a respective first group of signals associated with a first group of lines; adapting a respective second group of signals for analogue transmission or analogue reception over a second group of lines coupled to a second processing stage of the front end of the plurality of front ends; and switching the first groups of signals and the second groups of signals between the first processing stages and the second processing stages, such that, for at least one front end of the plurality of front ends, its first group of lines and its second group of lines are formed by different lines of the digital communication system.

## Description

### Field of Invention

The field of the invention relates to digital communication systems. Particular embodiments relate to an arrangement and method for processing signals at an access node of a digital communication system.

### Background

Nonlinear P-coding (i.e. pre-coding and/or post-coding), in particular Tomlinson-Harashima pre-coding or Generalized Decision Feedback Equalizer post-coding (where user signals are decoded sequentially and nonlinearly, and the result is fed back to subsequent users), has been proposed in digital communication systems, in particular in digital subscriber line (DSL) systems, as a means to improve performance of vectoring over the use of linear P-coding. However, the implementation cost of nonlinear P-coding is high, especially for large vectoring groups. This is, in part, due to sequential processing in which, for an arbitrary line ordering, an intermediate compensation signal on one line of the digital communication system can only be computed if the intermediate compensation signal for all other lines has already been computed. The high implementation cost of nonlinear P-coding is due to a significant increase in the required number of multiply-accumulate operations and the increased need for careful design of the pipeline and memory.

To reduce the requirements imposed by fully nonlinear P-coding, hybrid combinations of linear P-coding and nonlinear P-coding have also been proposed. However, to obtain satisfactory performance, the relevant control entity (e.g. a vectoring control entity) must be able to group lines of the digital communication system arbitrarily based on channel characteristics. However, the hardware resources of vectoring processors are typically physically associated with the lines in a predetermined manner - in other words, the line ordering is predetermined by the way lines happen to be physically mapped onto line interfaces connected to the vectoring processor.

### Summary

Therefore, it is an object of embodiments of the present invention to allow nonlinear P-coding with satisfactory performance.

According to a first aspect of the present invention there is provided an arrangement for processing signals at an access node of a digital communication system. The arrangement comprises a plurality of front ends and a switch. Each front end has a first processing stage and a second processing stage, wherein the first processing stage is configured for mitigating crosstalk using a respective nonlinear P-coder for a respective first group of signals associated with a first group of lines, and wherein the second processing stage is configured for adapting a respective second group of signals for analogue transmission or analogue reception over a second group of lines coupled to the second processing stage. The first group of lines and the second group of lines may be lines of the digital communication system. The switch is coupled to the respective first processing stages and the respective second processing stages of the plurality of front ends and is configured for switching the first groups of signals and the second groups of signals between the first processing stages and the second processing stages, such that, for at least one front end of the plurality of front ends, its first group of lines and its second group of lines are formed by different lines of the digital communication system.

Embodiments of the present invention are based *inter alia* on the insight that the switch can ensure that the right first groups are used for nonlinear P-coding, whilst ensuring that the right second groups are used for adapting signals for analogue transmission or reception. This allows nonlinear P-coding with satisfactory performance, because the P-coding can be constrained to the relevant, smaller groups. In this context, the term 'performance' may refer to data rate and/or capacity of one or more lines of the digital communication system.

It is to be noted that the term front end may refer in this context to a physical or logical entity comprising functions typically embodied by (a part of) one or more digital front ends, and optionally also including functions typically embodied by one or more analogue front ends, as will be explained further below.

A further advantage of particular embodiments of the present invention is that sensitivity can be improved, because switching the groups can help to reduce impact of ill-conditioning on performance, including suppression. Another further advantage of certain embodiments of the present invention is that power efficiency can be improved, because front end functionality such as vectoring processors for inactive lines can be selectively disabled, for example to bundle all inactive lines to a single front end. Yet another further advantage of some embodiments of the present invention is that the data rate of one or more lines of the digital communication system can be equalized more effectively, leading to improved quality of service for the lines.

In particular embodiments, this allows that so-called upper-PHY digital signal processing (DSP) functions may be performed in physically different hardware than so-called lower-PHY DSP and analogue frontend (AFE) functions.

In an embodiment, the arrangement comprises a centralised P-coder coupled with the plurality of front ends to further mitigate crosstalk of signals processed by the plurality of front ends, the centralised P-coder defining a P-coding matrix comprising a plurality of coefficients, wherein the plurality of coefficients represents at least one permutation between the first groups of signals and the second groups of signals, to form the switch. In this manner, costly duplication of hardware resources can be prevented.

In another embodiment, the arrangement comprises a control entity - preferably a vectoring control entity - coupled with the plurality of front ends, wherein the control entity is configured for periodically determining channel characteristics of the lines of the digital communication system (in particular of at least a subset of those lines) and, based on the determined channel characteristics, adjusting the first groups of lines. In this manner, it can be ensured that vectoring on the first groups of lines remains elective.

In a particular embodiment, the control entity is configured to configure a control path between the first processing stage of a first front end of the plurality of front ends and the second processing stage of a second front end of the plurality of front ends, the second front end differing from the first front end; wherein the control path preferably comprises one of: a DFE-VP interface between the front end and its vectoring processor; and a DFE-L2+ interface between the front end and a layer 2 or higher switch. Moreover, said first front end and second front end are configured for concerting their operation by exchanging information pertaining to at least one of the following: an analogue gain control; a digital flat gain; a discrete Fourier transform; an inverse discrete Fourier transform; a windowing setting; and a timing advance. In this manner, it can be ensured that a given second processing stage operates using the correct configuration settings in accordance with those of the correspondingly switched first processing stage, which need not be part of the same front end. Also, in this manner, the need for costly and complex addition of hardware interfaces can be reduced.

In a preferred embodiment, the control entity is configured for adjusting operation of said first front end and said second front end by performing a synchronized context switch using the control path. In this manner, the line grouping can be dynamically adjusted while the line is active, and the risk of retraining can be reduced.

In a further developed embodiment, each respective second processing stage of the plurality of front ends includes a respective physical device to which the respective second group of lines is physically connected. In this manner, costs can be kept limited whilst providing a dedicated front end and vectoring processor for each vectoring sub-group.

In another embodiment, at least one front end of the plurality of front ends includes multiple physical devices, each physical device of the multiple physical devices being connected to a subset of the respective second group of lines. The multiple physical devices may interface with each other to exchange constellation points (otherwise known as tone data). For example, the multiple physical devices may be connected in a point-to-point or in a ring topology, e.g. using DFE-DFE interfaces. In this way, the vectoring sub-group corresponding with the lines in the respective second group of lines may be increased, and hence the performance may be increased, compared to physical devices that do not communicate with each other via a DFE-DFE interface.

In yet another embodiment, the switch is configured for switching the first groups of signals and the second groups of signals between the first processing stages and the second processing stages inversely for upstream traffic and for downstream traffic respectively. In this manner, traffic paths through the front ends remain conceptually clear, and also convenience of computation is improved. Alternatively, if the switching is not inverse, then the first processing stage of some front ends may operate on different first groups of signals for downstream traffic and upstream traffic respectively. However, this can happen transparently from the viewpoint of higher layers.

According to another aspect of the present invention, there is provided an access node of a digital communication system, the access node comprising an arrangement according to any one of the above described embodiments.

It will be understood by the skilled person that the features and advantages disclosed hereinabove with respect to various embodiments of the arrangement may also apply, *mutatis mutandis,* to various embodiments of the access node.

In a specific exemplary embodiment, the access node may be a digital subscriber line access multiplexer (DSLAM), for example placed in a cabinet or a basement or such. In another specific exemplary embodiment, the access node may be a distribution point unit (DPU), in particular a G.fast distribution point unit. G.fast has been specified in ITU-T (International Telecommunication Union Telecommunication Standardization Sector) recommendations G.9700 and G.9701.

According to another aspect of the present invention, there is provided a method for processing signals at an access node of a digital communication system. The method comprises: mitigating crosstalk at a first processing stage of a front end of a plurality of front ends using a respective nonlinear P-coder for a respective first group of signals associated with a first group of lines; adapting a respective second group of signals for analogue transmission or analogue reception over a second group of lines coupled to a second processing stage of the front end of the plurality of front ends; and switching the first groups of signals and the second groups of signals between the first processing stages and the second processing stages, such that, for at least one front end of the plurality of front ends, its first group of lines and its second group of lines are formed by different lines of the digital communication system.

It will be understood by the skilled person that the features and advantages disclosed hereinabove with respect to various embodiments of the arrangement may also apply, *mutatis mutandis,* to various embodiments of the method.

In an embodiment, the method comprises defining, at a centralised P-coder for further mitigating crosstalk of signals processed by the plurality of front ends, a P-coding matrix comprising a plurality of coefficients, wherein the plurality of coefficients represents at least one permutation between the first groups of signals and the second groups of signals, to perform the switching.

In another embodiment, the method comprises periodically determining channel characteristics of at least a subset of the lines of the digital communication system and, based on the determined channel characteristics, adjusting the first groups of lines.

In another possible embodiment, the method comprises: configuring a control path between the first processing stage of a first front end of the plurality of front ends and the second processing stage of a second front end of the plurality of front ends, the second front end differing from the first front end; wherein the control path preferably comprises one of: a DFE-VP interface between the front end and its respective vectoring processor; and a DFE-L2+ interface between the front end and a layer 2 or higher switch; and concerting operation of said first front end and second front end by exchanging information pertaining to at least one of the following: an analogue gain control; a digital flat gain; a discrete Fourier transform; an inverse discrete Fourier transform; a windowing setting; and a timing advance.

In a further developed embodiment, each respective second processing stage of the plurality of front ends includes a respective physical device to which the respective second group of lines is physically connected.

In yet another embodiment, the switching comprises switching the first groups of signals and the second groups of signals between the first processing stages and the second processing stages inversely for upstream traffic and for downstream traffic respectively.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figure 1 schematically illustrates an embodiment of an arrangement according to the present invention;
Figure 2 schematically illustrates another embodiment of an arrangement according to the present invention, e.g. a further development of the arrangement embodiment shown in Figure 1;
Figure 3 schematically illustrates a flowchart of an embodiment of a method according to the present invention, e.g. as performed in relation to the arrangement embodiment shown in Figure 1 or 2;
Figure 4 schematically illustrates a flowchart of another embodiment of a method according to the present invention e.g. a further development of the method embodiment shown in Figure 3; and
Figure 5 schematically illustrates a flowchart of yet another embodiment of a method according to the present invention e.g. a further development of the method embodiment shown in Figure 3 or 4.

### Description of embodiments

Access nodes (ANs) of a digital communication system (e.g. a digital subscriber line (DSL) based system) using vectoring in order to mitigate crosstalk typically comprise one or more transceivers. Each transceiver may comprise one or more front ends, which were defined above. A front end may comprise or embody the functionality of (part of) one or more digital frontends (DFEs), as well as one or more analogue frontends (AFEs) which interface with lines of the digital communication system.

Typically, a single DFE performs physical layer (PHY) functions for a plurality of lines (or, equivalently, for a plurality of users) of the digital communication system. Lines may also be called pairs, referring to the common implementation of (unshielded) twisted copper pairs of wires, each pair forming one line. PHY functions may include coding, constellation mapping, (inverse) discrete Fourier transforms ((I)DFT), et cetera.

In general, a DFE chip may also have some limited VP resources that are used for small systems, either a DFE in isolation, or a ring/mesh of a handful of DFEs. For larger systems, an external VP chip may be used, that (for the downstream situation) receives mapped constellations (also known as tone data) from multiple DFEs and sends back precoded constellations to those same DFEs. The DFE may then perform further processing and may send the processed signal forward (in downstream) to an AFE.

For example, an external VP may be used, as a centralised P-coder. It is noted that such a centralised P-coder may preferably be fully linear, in order to minimise complexity costs - however, such a centralised P-coder may instead be substantially linear, meaning that it in addition to its linear operation it also represents a minor nonlinear operation. Then, the DFE-internal VP would be idle. Therefore, advantageously, the internal VP may be exploited to perform non-linear P-coding (i.e. pre-coding or post-coding, depending on whether crosstalk is mitigated by preprocessing before transmission on a line or by post-processing after transmission on a line), NLP, among the group of lines that happen to be processed in that DFE. In this way, a block-NLP scheme may be obtained, in which NLP is performed per block of users (in this example, a block is defined by a DFE), and the result may be fed through to a linear VP (in this example, the external VP). The disadvantage is that the lines that happen to be processed in a DFE depend on how the pairs were physically attached to the AFEs, that are in turn attached to the DFEs. Hence, no freedom currently exists for a control entity such as a vectoring control entity (VCE) to choose which lines to group in a block, for vectoring.

Thus, it is advantageous to provide to the control entity the means for grouping lines into blocks.

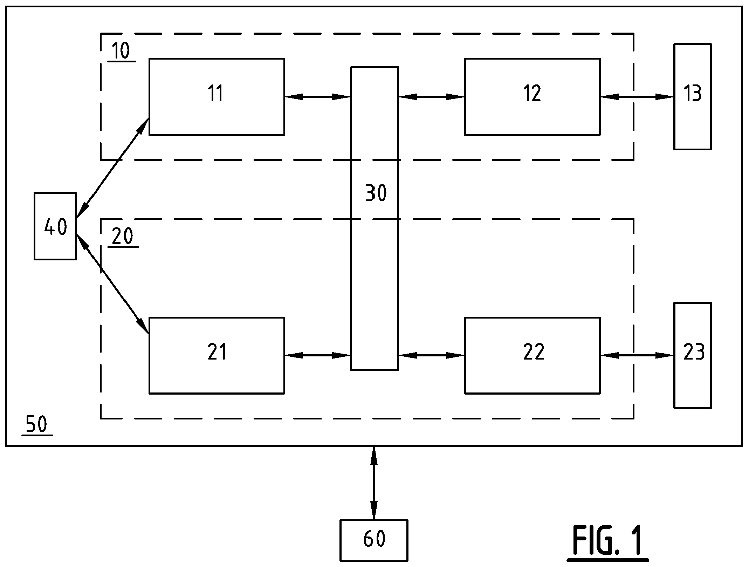

Figure 1 schematically illustrates an embodiment of an arrangement according to the present invention. The arrangement may be suitable for processing signals at an access node 50 of a digital communication system. The arrangement may comprise a plurality of front ends 10, 20. In this example, without loss of generality a first front end 10 and a second front end 20 are shown. However, it will be understood that more than two front ends may be used. Each front end 10, 20 may have a first processing stage 11, 21 and a second processing stage 12, 22. The first processing stage 11, 21 may be configured for mitigating crosstalk using a respective non-linear P-coder (NLP, not shown - where a "P-coder" may stand for a pre-coder and/or a post-coder) for a respective first group of signals associated with a first group of lines of the digital communication system. The term 'respective' may refer to each separate front end 10, 20 of the plurality of front ends having its own separate NLP, in a preferred embodiment. However, in alternative embodiments, one or more of the front ends may share one or more NLPs.

The second processing stage 12, 22 may be configured for adapting a respective second group of signals for analogue transmission or analogue reception over a second group of lines of the digital communication system, the second group of lines being coupled to the second processing stage 12, 22. In other words, the second processing stage 12, 22 may ensure that signals to be transmitted over or received over the lines of the digital communication system are adequately processed, e.g. taking into account transmission requirements of the relevant physical medium (i.e. the relevant line of the digital communication system). The arrangement may further comprise a switch 30, which may be coupled to the respective first processing stages 11, 21 and the respective second processing stages 12, 22 of the plurality of front ends 10, 20 and which may be configured for switching the first groups of signals and the second groups of signals between the first processing stages 11, 21 and the second processing stages 12, 22, such that, for at least one front end of the plurality of front ends 10, 20, its first group of lines and its second group of lines are formed by different lines of the digital communication system.

In other words, for that at least one front end, its first group of lines and its second group of lines may contain one or more different lines of the digital communication system, which advantageously allows to perform upper-PHY processing on groups of signals based on vectoring sub-groups and lower-PHY processing on different groups of signals based on the way the lines are coupled to the front ends. This in turn allows nonlinear P-coding with satisfactory performance, because smaller (and thus less complex and/or cheaper) nonlinear P-coders can be used or equivalently, for a same size of nonlinear P-coder, better performance can be achieved.

The figure further shows an uplink interface 40, which may be configured for relaying signals that are to be transmitted to an end user, or that have been received by the access node 50 from a network. In this example, abstraction is made of how the first groups of signals are (de)multiplexed to or from the respective first processing stages 11, 21.

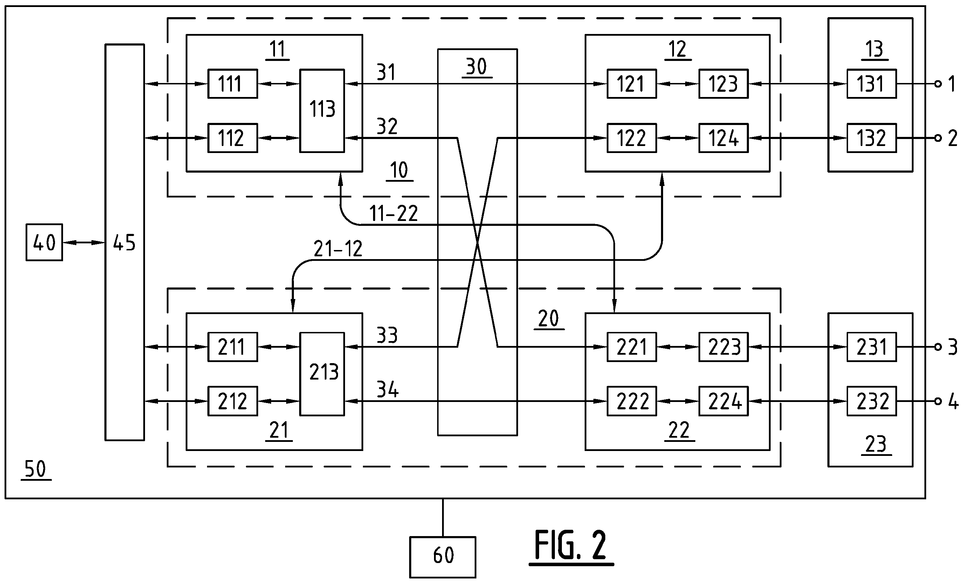

The figure further shows an optional vectoring control entity (VCE) 60, or more generally a control entity of the access node 50. Also, the figure shows a first line interface 13 and a second line interface 23, respectively coupling one or more lines (not shown) of the digital communication system to the second processing stage 12 of the first front end 10 and to the second processing stage 22 of the second front end 20, as will be shown in more detail in Figure 2.

In this context, the term switching may refer to permuting sets - for example, if one line of a group of lines is switched, then another line from another group of lines may be substituted in its place, while the one line may be substituted in place of the other line in the other group, or may in turn substitute yet another line in yet another group. It is to be noted that the switch may be configured for switching the first groups of signals and the second groups of signals between the first and second processing stages - that is, the switching may permute the first groups of signals compared to the second groups of signals and/or the second groups of signals compared to the first groups of signals. Preferably, the first groups of signals may correspond to vectoring sub-groups, which may in this context refer to groups of signals that are subject to crosstalk and whose crosstalk is advantageously mitigated (namely by vectorising) in unison. By contrast, the second groups of lines which are coupled to the second processing stage may refer in this context to groups of lines of the digital communication system that happen to be physically (i.e. in three-dimensional space) associated, e.g. by their mutual proximity compared to other lines excluded from the physically associated group, or e.g. by virtue of their being physically attached to or connected to multiple interfaces of a same element.

Figure 2 schematically illustrates another embodiment of an arrangement according to the present invention, e.g. a further development of the arrangement embodiment shown in Figure 1. The figure shows an arrangement suitable for processing signals at an access node 50 of a digital communication system. The arrangement may comprise a plurality of front ends 10, 20. Again, without loss of generality, two front ends are shown in this example. Each front end 10, 20 of the plurality of front ends 10, 20 may have a first processing stage 11, 12 and a second processing stage 12, 22. The first processing stage 11,21 may be configured for mitigating crosstalk using a respective NLP 113, 213 for a respective first group of signals associated with a first group of lines. The second processing stage 12, 22 may be configured for adapting a respective second group of signals for analogue transmission or analogue reception over a second group of lines coupled to the second processing stage. The arrangement may further comprise a switch 30 coupled to the respective first processing stages and the respective second processing stages of the plurality of front ends 10, 20, which may be configured for switching the first groups of signals and the second groups of signals between the first processing stages 11, 12 and the second processing stages 12, 22, such that, for at least one front end of the plurality of front ends , its first group of lines and its second group of lines are formed by different lines of the digital communication system. Analogous considerations may apply for this embodiment as do for the embodiment illustrated with reference to Figure 1.

In this particular example, there may be four lines 1, 2, 3, 4. The number four is used here without loss of generality, and it will be understood that another number may be used. Each of these lines 1, 2, 3, 4 may be attached to a respective line termination 131, 132, 231, 232, comprised two-by-two by a first and a second line interface 13, 23, similarly to those discussed above.

Moreover, the figure shows that the first processing stage 11 of the first front end 10 also may comprise a first DFE module 111 and a second DFE module 112, as well as a first NLP 113. Analogously, the first processing stage 21 of the second front end 20 also may comprise a first DFE module 211 and a second DFE module 212, as well as a second NLP 213.

The figure also shows an uplink interface 40, e.g. one similar to the one discussed above. The figure further shows a layer 2 or higher (also known as "L2+") switch 45 coupled to the uplink interface 40 and to the respective first processing stages 11, 21 - in particular to respective DFE modules 111, 112, 211, 212 for each respective signal processed by the respective front end 10, 20. In this example, the L2+ switch 45 may (de)multiplex the signals to and from the uplink interface 40 and to and from the front ends 10, 20. The figure also shows a control entity 60, e.g. one similar to the one discussed above.

In this context, the DFE modules 111, 112, 121, 122 may preferably be modules of one DFE chip, and likewise the DFE modules 211, 212, 221 and 222 may preferably be modules of another DFE chip. However, it may also be considered to provide one or more of the DFE modules as a separate physical device instead. For example, modules 111 and 121 may be modules of one DFE chip, and modules 112 and 122 may be modules of another chip. In this example, NLP module 113 is distributed over two chips that are able to exchange tone data with each other using a vectoring interface.

The respective NLPs 113,213 may be coupled via the switch 30 to a corresponding second processing stage 12, 22 of the first front end 10 and the second front end 20 - in particular to a first DFE module 121 and a second DFE module 122 of the first front end 10 and to a first DFE module 221 and a second DFE module 222 of the second front end 20. In this particular example, there may be four (corresponding in this example to the number of lines 1-4 carrying signals) distinct couplings 31, 32, 33, 34, each carrying a signal. It is shown in the figure how the signals for / from line 1 and line 4 are not switched, and how the signals for / from line 2 and line 3 are switched by the switch 30. In other words, one signal from the first group and one signal from the second group are switched between the first 11 and second 21 processing stages of the first front end 10, namely with one signal from the first group and one signal from the second group of the second front end 20 respectively. It will be understood that the same can be expressed equivalently from the perspective of the second front end 20.

The second processing stage 12 of the first front end 10 may also comprise AFE 123, coupling DFE module 121 to line 1 via line termination 131, and AFE 124, coupling DFE module 122 to line 2 via line termination 132. The second processing stage 22 of the second front end 20 may also comprise AFE 223, coupling DFE module 221 to line 3 via line termination 231, and AFE 224, coupling DFE module 222 to line 4 via line termination 232. It will be understood that the AFEs need not necessarily be comprised within the same hardware or the same logical module as the DFEs, and may be considered as separate elements from the respective front ends 10, 20. Advantageously, one DFE may be connected to multiple AFEs, since the port density of a DFE chip may be larger than that of an AFE chip.

For example, if, based on channel and/or quality of service (QoS) knowledge, the control entity determines that lines / users should be grouped into two blocks as {line 1, line 3} and {line 2, line 4}, but that lines {1,2} are attached (via AFEs) to a first DFE, and lines {3,4} are attached to a second DFE, it may decide to adjust the first groups of lines.

Therefore, in a particularly preferred embodiment, a centralised P-coder coupled with the plurality of front ends 10, 20 to further mitigate crosstalk of signals processed by the plurality of front ends 10, 20, and defining a P-coding matrix comprising a plurality of coefficients, wherein the plurality of coefficients may represent at least one permutation between the first groups of signals and the second groups of signals, to form the switch 30. The columns corresponding to the first block of lines / users (i.e. lines {1,3}) are arranged (permuted) such that the signals from the first block of lines are designed to be received from (or, in upstream, delivered to) a single DFE. Therefore, in this particular embodiment, as is also illustrated in Figure 2, coupling 32 and coupling 33 may be switched by switch 30 to ensure that the first group of signals processed by the first processing stage 11 of front end 10 corresponds with the first group of lines, e.g. forming a vectoring sub-group, namely the group of lines {1,3}, while the second group of signals processed by the second processing stage 12 of the same front end 10 corresponds with the second group of lines, namely the group of lines {1,2}. For the second front end 20, an analogous reasoning applies. The switch 30 may for example perform this operation by appending the following permutation matrix to the P-coder (in a particularly advantageous embodiment, the permutation and P-coding would be collapsed into a single matrix):
[1000;
0010;
0100;
0001]

As a consequence, upper-PHY processing may be done in the same front end for lines / users of the same vectoring sub-group, but lower-PHY processing may be done in different front ends for users in that same sub-group, because lower-PHY processing benefits less from being performed in unison for that same sub-group than from being performed for a group of physically associated lines.

In a specific embodiment of the arrangement according to the present invention, the first processing stage 11, 21 of a respective front end 10, 20 of the plurality of front ends may be configured for:
- capturing data (e.g. bits from Ethernet packets) from an uplink switch;
- encoding the captured bits into data transmission units;
- encoding the data transmission units using error-correcting coding;
- mapping the encoded data transmission units onto constellation points; and
- P-coding the mapped constellation points to mitigate crosstalk.

In this specific embodiment, or independently, the second processing stage 12, 22 of a respective front end 10, 20 of the plurality of front ends may be configured for:
- modulating the precoded points into modulated symbols using an inverse discrete Fourier transform;
- processing the modulated symbols using cyclic extension and windowing; and
- outputting the processed symbols for transmission on the respective second group of lines.

Also, in particular embodiments of the arrangement according to the present invention, it is advantageous to provide a means to control the AFE and lower-PHY functions of a DFE in a split-processing design. For example, the AFE settings (e.g. analogue gain control) and lower-PHY functions (digital flat gain, IFFT, windowing, timing advance) may be different for the different lines / users. Hence, a central control entity may be advantageous, in order to establish a control path between the upper-PHY (the DFE modules 111, 112, 211, 212 in Figure 2) and the lower-PHY (the DFE modules 121, 122, 221, 222 in Figure 2). Figure 2 shows such control paths as 11-22 and 21-12. In detail, these may comprise a first control path 11-22 coupling the first stage 21 of the first front end 10 to the second stage 22 of the second front end 20 and a second control path 21-12 coupling the first stage 21 of the second front end 20 to the second stage 12 of the first front end 10. The control paths may advantageously exploit an existing interface, such as the DFE-VP interface or the DFE-L2+ interface.

Since channel conditions vary over time, and users come and go, it may be desired to dynamically adjust the grouping of users. Therefore, a synchronized context switch may advantageously be performed. Assuming one wants to re-group from original first groups {1,3} {2,4} to new first groups {1,2},{3,4}, one may then:
Copy the context (bits, gains, FEQ, FEC settings, etc.) of user 3 from DFE module 112 to DFE module 211; and
Copy the context (bits, gains, FEQ, FEC settings, etc.) of user 2 from DFE module 211 to DFE module 112.

And one may synchronize the following:
Swap users 2 and 3 in the L2+ switch 45;
Swap the context in DFE module 112 from user 3 to user 2, sequentially for each pipeline stage;
Swap the context in DFE module 211 from user 2 to user 3, sequentially for each pipeline stage;
Permute the linear P-coder (e.g. embodied in switch 30);
Swap the control of DFE module 122 and AFE 124 from DFE module 211 to DFE module 112; and
Swap the control of DFE module 211 and AFE 223 from DFE module 112 to DFE module 211.

In upstream, one may choose to do a similar swap or not. If upstream is not swapped, the consequence is that the L2+ may receive upstream traffic from a given user from a different front end than the front end it sends its downstream traffic to.

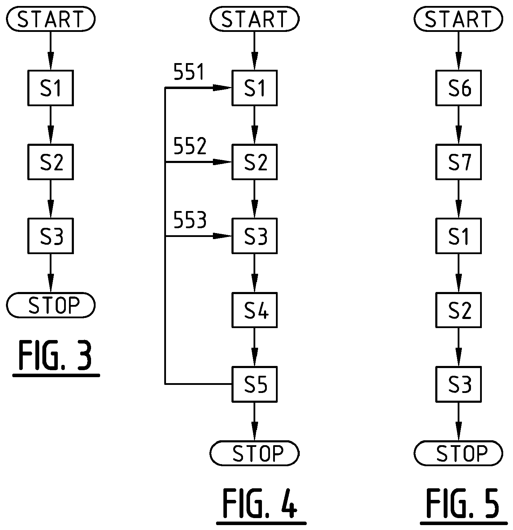

Figure 3 schematically illustrates a flowchart of an embodiment of a method according to the present invention, thus for processing signals at an access node of a digital communication system, e.g. as performed in relation to the arrangement embodiment shown in Figure 1 or 2.

Operation S1 comprises mitigating crosstalk at a first processing stage of a front end of a plurality of front ends using a respective nonlinear P-coder for a respective first group of signals associated with a first group of lines.

Operation S2 comprises adapting a respective second group of signals for analogue transmission or analogue reception over a second group of lines coupled to a second processing stage of the front end of the plurality of front ends.

Operation S3 comprises switching the first groups of signals and the second groups of signals between the first processing stages and the second processing stages, such that, for at least one front end of the plurality of front ends, its first group of lines and its second group of lines are formed by different lines of the digital communication system. This advantageously allows to perform upper-PHY processing on groups of signals based on vectoring sub-groups and lower-PHY processing on different groups of signals based on physical attachments, as explained above.

Figure 4 schematically illustrates a flowchart of another embodiment of a method according to the present invention e.g. a further development of the method embodiment shown in Figure 3. Part of the shown embodiment corresponds to the method embodiment shown in Figure 3, and so will not be further explained.

Operation S4 is here shown following operation S3, but may in practice be performed in parallel, concurrently, or independently, as data path and control path operations may be separated in that manner Operation S4 comprises periodically determining channel characteristics of the lines of the digital communication system.

Operation S5 comprises, based on the determined channel characteristics, adjusting the first groups of lines. This adjusting may for example comprise one or more of adjusting operation S1 in operation S51, adjusting operation S2 in operation S52, and adjusting S3 in operation S53.

Figure 5 schematically illustrates a flowchart of yet another embodiment of a method according to the present invention e.g. a further development of the method embodiment shown in Figure 3 or 4. Part of the shown embodiment corresponds to the method embodiment shown in Figure 3, and so will not be further explained.

Operation S6 comprises configuring a control path between the first processing stage of a first front end of the plurality of front ends and the second processing stage of a second front end of the plurality of front ends, the second front end differing from the first front end; wherein the control path preferably is one of: a DFE-VP interface between the front end and its respective vectoring processor; and a DFE-L2+ interface between the front end and a layer 2 or higher switch.

Operation S7 comprises concerting operation of said first front end and second front end by exchanging information pertaining to at least one of the following: an analogue gain control; a digital flat gain; a discrete Fourier transform; an inverse discrete Fourier transform; a windowing setting; and a timing advance.

As for Figure 4, operations S6 and S7 may in practice be performed in parallel, concurrently, or independently with/from operations S1-S3, as data path and control path operations may be separated in that manner.

It must be understood that some of the above methods are only or mostly described for precoding, but that the methods are equally applicable to postcoding, in which case the sequence of some steps is reversed.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. An arrangement for processing signals at an access node of a digital communication system, the arrangement comprising:
- a plurality of front ends, each front end having a first processing stage and a second processing stage, wherein the first processing stage is configured for mitigating crosstalk using a respective nonlinear P-coder for a respective first group of signals associated with a first group of lines, and wherein the second processing stage is configured for adapting a respective second group of signals for analogue transmission or analogue reception over a second group of lines coupled to the second processing stage; and
- a switch coupled to the respective first processing stages and the respective second processing stages of the plurality of front ends and configured for switching the first groups of signals and the second groups of signals between the first processing stages and the second processing stages, such that, for at least one front end of the plurality of front ends, its first group of lines and its second group of lines are formed by different lines of the digital communication system.

2. The arrangement of claim 1, comprising a centralised P-coder coupled with the plurality of front ends to further mitigate crosstalk of signals processed by the plurality of front ends, the centralised P-coder defining a P-coding matrix comprising a plurality of coefficients, wherein the plurality of coefficients represents at least one permutation between the first groups of signals and the second groups of signals, to form the switch.

3. The arrangement of any one of the previous claims, comprising a control entity coupled with the plurality of front ends, wherein the control entity is configured for periodically determining channel characteristics of the lines of the digital communication system and, based on the determined channel characteristics, adjusting the first groups of lines.

4. The arrangement of claim 3, wherein the control entity is configured to configure a control path between the first processing stage of a first front end of the plurality of front ends and the second processing stage of a second front end of the plurality of front ends, the second front end differing from the first front end; wherein the control path preferably comprises one of: a DFE-VP interface between the front end and its vectoring processor; and a DFE-L2+ interface between the front end and a layer 2 or higher switch; and
wherein said first front end and second front end are configured for concerting their operation by exchanging information pertaining to at least one of the following: an analogue gain control; a digital flat gain; a discrete Fourier transform; an inverse discrete Fourier transform; a windowing setting; and a timing advance.

5. The arrangement of claim 4, wherein the control entity is configured for adjusting operation of said first front end and said second front end by performing a synchronized context switch using the control path.

6. The arrangement of any one of the previous claims, wherein each respective second processing stage of the plurality of front ends includes a respective physical device to which the respective second group of lines is physically connected.

7. The arrangement of any one of the previous claims, wherein the switch is configured for switching the first groups of signals and the second groups of signals between the first processing stages and the second processing stages inversely for upstream traffic and for downstream traffic respectively.

8. An access node of a digital communication system, the access node comprising an arrangement according to any one of the previous claims.

9. A method for processing signals at an access node of a digital communication system, the method comprising:
- mitigating crosstalk at a first processing stage of a front end of a plurality of front ends using a respective nonlinear P-coder for a respective first group of signals associated with a first group of lines;
- adapting a respective second group of signals for analogue transmission or analogue reception over a second group of lines coupled to a second processing stage of the front end of the plurality of front ends; and
- switching the first groups of signals and the second groups of signals between the first processing stages and the second processing stages, such that, for at least one front end of the plurality of front ends, its first group of lines and its second group of lines are formed by different lines of the digital communication system.

10. The method of claim 9, comprising defining, at a centralised P-coder for further mitigating crosstalk of signals processed by the plurality of front ends, a P-coding matrix comprising a plurality of coefficients, wherein the plurality of coefficients represents at least one permutation between the first groups of signals and the second groups of signals, to perform the switching.

11. The method of any one of the claims 9-10, comprising periodically determining channel characteristics of the lines of the digital communication system and, based on the determined channel characteristics, adjusting the first groups of lines.

12. The method of any one of the claims 9-11, comprising:
- configuring a control path between the first processing stage of a first front end of the plurality of front ends and the second processing stage of a second front end of the plurality of front ends, the second front end differing from the first front end; wherein the control path preferably comprises one of: a DFE-VP interface between the front end and its respective vectoring processor; and a DFE-L2+ interface between the front end and a layer 2 or higher switch; and
- concerting operation of said first front end and second front end by exchanging information pertaining to at least one of the following: an analogue gain control; a digital flat gain; a discrete Fourier transform; an inverse discrete Fourier transform; a windowing setting; and a timing advance.

13. The method of claim 12, comprising:
- adjusting operation of said first front end and said second front end by performing a synchronized context switch using the control path.

14. The method of any one of the claims 9-13, wherein each respective second processing stage of the plurality of front ends includes a respective physical device to which the respective second group of lines is physically connected.

15. The method of any one of the claims 9-14, wherein the switching comprises switching the first groups of signals and the second groups of signals between the first processing stages and the second processing stages inversely for upstream traffic and for downstream traffic respectively.
